# EUROPÄISCHE PATENTANMELDUNG

(11) **EP 1 920 814 A1**
(43) Veröffentlichungstag der Anmeldung: **14.05.2008**
(21) Anmeldenummer: 06120908.6
(22) Anmeldetag: 19.09.2006
(51) Int. Cl.: B01D 29/72, B01D 33/03, B01D 63/16, B01D 65/08

(54) **Filtrationseinrichtung zur Filtration von Flüssigkeiten und Verfahren zu deren Reinigung**

(71) Anmelder: Westfalia Separator GmbH, 59302 Oelde (DE)
(72) Erfinder: Mackel, Wilfried, 59510 Lippetal/Herzfeld (DE); Quiter, Kathrin, 48317 Drensteinfurt (DE)
(74) Vertreter: Specht, Peter

(57) **Zusammenfassung**

Filtrationseinrichtung (1) zur Filtration von Flüssigkeiten, die ein vorzugsweise in einem Behältnis (2) befestigtes Mikrosieb (3) mit Öffnungen (4) aufweist, welche das Mikrosieb (3) durchsetzen, wobei dem Mikrosieb (3) ein Aktuator zugeordnet ist, mit dem es möglich ist, das Mikrosieb (3) in der Flüssigkeit parallel zur Erstreckungsrichtung seiner Öffnungen (4) derart zu bewegen, daß ein Spüleffekt entsteht, der Verstopfungen und Verschmutzungen aus den Öffnungen (4) des Mikrosiebes löst.

## Beschreibung

Die Erfindung betrifft eine Filtrationseinrichtung zur Filtration von Flüssigkeiten nach dem Oberbegriff des Anspruchs 1.

Bekannt sind z.B. Rückspüleinrichtungen, um die Flußrichtung zum Reinigen umzukehren.

Um hohe Fluxraten bei der Mikrofiltration einer Flüssigkeit mit Mikrosieben zu erzielen, ist es auch bekannt, in der Filtrationseinrichtung eine hochfrequente Rückspüleinrichtung anzuordnen, welche direkt auf die Flüssigkeit einwirkt, um in dieser wechselnde Druckverhältnisse zu erzeugen, die eine Rückströmung der gereinigten Flüssigkeit durch die Mikrosieb bewirken, um die Oberfläche des Mikrosiebes freizuspülen und von Verstopfungen zu befreien.

Zu hohe Drücke können dabei zu einer unzulässigen Verformung des mit Druck beaufschlagten Mikrosiebes führen und haben in der Regel sogar eine Zerstörung des Mikrosiebes zur Folge.

Die Erfindung hat die Aufgabe, dieses Problem mit einfachen konstruktiven Mitteln zu lösen.

Die Erfindung löst diese Aufgabe durch die Gegenstände der Ansprüche 1 und 9.

Danach ist dem Mikrosieb ein Aktuator zugeordnet, mit dem das Mikrosieb in der Flüssigkeit vorzugsweise senkrecht zu seiner Haupterstreckungsebene derart bewegbar ist, daß ein Spüleffekt entsteht, der Verstopfungen und Verschmutzungen aus den Öffnungen des Mikrosiebes löst.

Erfindungsgemäß wird die notwendige Rückspülung am Mikrosieb nicht durch eine direkte Änderung der Druckverhältnisse erzeugt sondern durch eine Bewegung des Mikrosiebes selbst mit Hilfe des Aktuators. Diese Bewegung erfolgt so schnell, daß auf der Rückseite des Mikrosiebes (in Flußrichtung betrachtet) ein Staudruck entsteht, der zu der erforderlichen Rückströmung führt.

Zwar ist es von Membransieben her bekannt, auch diese mit einem Aktuator zu bewegen. Die besonders vorteilhafte Wirkung der Bewegung eines Mikrosiebes mit Öffnungen, welche das Siebe durchsetzen, tritt dabei aber nicht auf, da die Membran nicht von durchgehenden Löchern durchsetzt ist.

Als Auslenkungsamplitude sind bei einem Mikrosieb nur wenige Mikrometer erforderlich. Die Wegamplitude läßt sich so einstellen, daß eine Überlastung ausgeschlossen ist.

Um die Mikrosieb zu bewegen, sind sowohl mechanische wie auch elektrisch gesteuerte Aktuatorensysteme denkbar.

Eine erste einfache Lösung besteht darin, den Aktuator als Stößel mechanischer Art auszulegen, der auf die Oberfläche der Mikrosieb einwirkt und dem beispielsweise eine elektromotorische oder elektromagnetische Antriebseinrichtung zugeordnet ist, die den Stößel mit vorgebbarer Frequenz hin und her bewegt.

Diese Lösung hat insbesondere den Vorteil, daß die Amplitude der Stößelbewegung genau vorgebbar und damit begrenzbar ist.

Alternativ wäre es auch denkbar, z.B. mit Hilfe interner und/oder externer Magnete an dem Mikrosieb eine elektromagnetische Betätigung vorzunehmen.

Nach einer weiteren besonders bevorzugten Ausführungsform erfolgt eine Integration von piezoelektrischen Elementen direkt in das Mikrosieb oder ein Ansetzen derartiger Elemente an das Mikrosieb. Diese Lösung hat den Vorteil, daß zusätzliche mechanische Elemente vollständig entfallen können und dennoch auf einfache Weise eine gesteuerte Durchspülung des Mikrosiebes erzeugbar ist.

Besondere Vorteile der Erfindung sind in dem einfachen Aufbau sowie der Unabhängigkeit der Rückspülung von indirekt und aufwendig gesteuerten Drucksystemen zu sehen.

Darüber hinaus ist nicht nur die Amplitude der Rückspülfrequenz bzw. Bewegungsfrequenz genau vorgebbar, sondern es besteht auch noch der Vorteil, daß die Frequenz der Rückspülung im Grunde nach oben hin nicht limitiert ist.

Druckgesteuerte Systeme liefern insofern erheblich schlechtere Maximalfrequenzwerte.

Dennoch werden erfindungsgemäß unerwünschte Zerstörungen des Mikrosiebs auf einfache und zuverlässige Weise vermieden.

Weitere vorteilhafte Ausgestaltungen sind den übrigen Unteransprüchen zu entnehmen.

Nachfolgend wird die Erfindung anhand eines Ausführungsbeispiels unter Bezug auf die Zeichnung näher beschrieben. Es zeigt:
- Figur 1: ein erstes Ausführungsbeispiel einer Filtrationseinrichtung in einer schematisierten Schnittdarstellung; und
- Figur 2: ein zweites Ausführungsbeispiel einer schematisch darstellten Filtrationseinrichtung.

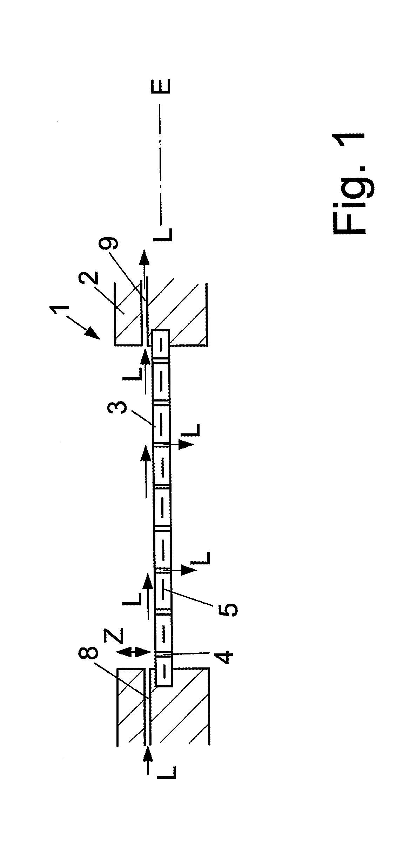

Fig. 1 zeigt eine Filtrationseinrichtung 1, die wenigstens ein an einem Behältnis 2, das als Widerlager dient, befestigtes Mikrosieb 3 aufweist. Zu filtrierende Flüssigkeit L fließt durch einen Zulauf 8 auf das Mikrosieb 3. Die Flüssigkeit L strömt sodann über das vorzugsweise horizontal ausgerichtete Mikrosieb 3 und durch Öffnungen 4 des Mikrosiebes jedenfalls teilweise durch dieses nach unten durch. Ggf. kann ein nicht filtrierter Teil der Flüssigkeit durch einen Ablauf 9 wieder abfließen.

Die Öffnungen 4 durchsetzen das Mirkosieb 3 vollständig.

Bei der Filtration setzen sich die Öffnungen 4 des Mikrosiebs 3 leicht mit Verschmutzungen zu. Um diese Verschmutzungen aus dem Mikrosieb 3 zu lösen bzw. um eine Verschmutzung von vorneherein zu verhindern, sind dem Mikrosieb 3 wenigstens einer oder mehrere Aktuatoren zugeordnet.

Nach Figur 1 sind die Aktuatoren als mehrere piezoelektrische Elemente 5 ausgelegt, die hier rein schematisch dargestellt sind. Die piezoelektrischen Elemente 5 sind mit einer Spannung beaufschlagbar sind (hier nicht detailliert dargestellt.

Die Beaufschlagung der piezoelektrischen Elemente 5 mit einer wechselfrequenten Spannung führt zu einer Schwingung S der Mikrosieb 3, deren Amplitude durch die Spannung einstellbar ist, mit der die Piezoelemente 5 beaufschlagt werden.

Dabei können Frequenz und Amplitude der Schwingung S derart gewählt werden, daß durch das Mikrosieb 3 eine Rückströmung erzeugt wird, welche Verschmutzungen durch die Sieböffnungen lösen. Das Mikrosieb 3 bewegt sich dabei vorzugsweise senkrecht zu der Haupterstreckungsebene E, also hier vertikal (Richtung z). Wird ein gebogenes oder in sich geknicktes Mikrosieb eingesetzt, ist die Bewegung zumindest lokal im Bereich der Öffnungen senkrecht zur Siebfläche In Fig. 1 ist die Bewegung auch axial/parallel zu den Öffnungen 4.

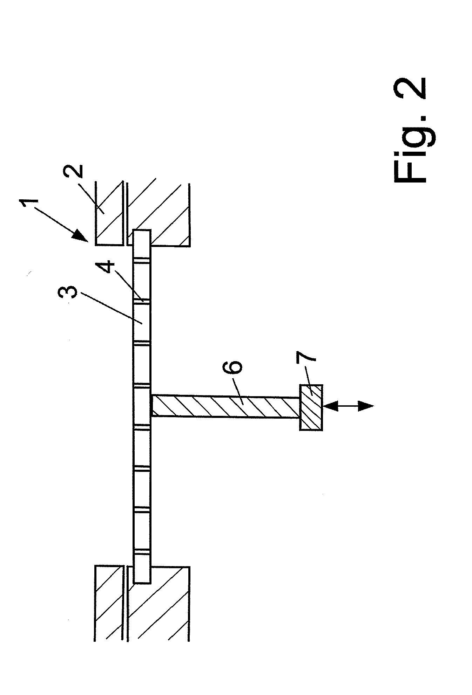

In Figur 2 ist dem Mikrosieb 3 als Aktuator ein mechanischer Stößel 6 zugeordnet, der mittels einer Antriebsvorrichtung 7 (elektromotorischer oder elektromagnetischer Art) senkrecht zur Sieboberfläche bewegbar ist und vorzugsweise an dieser befestigt ist. Das Mikrosieb 3 folgt daher der Bewegung des Stößels 6.

Durch geeignete Vorgabe und Einstellung der Amplitude und der Frequenz der Bewegung der Stößels 6 ist es wiederum möglich, eine Art Rückspüleffekt zu erzielen, der Verschmutzungen und Verstopfungen durch die Öffnungen 4 spült. Die Wahl der Amplitude kann produktabhängig gewählt werden und kann bei der Reinigung auch variiert werden, um den Reinigungseffekt zu erhöhen.

Besondere Vorteile sind bei beiden Ausführungsbeispielen die extern einstellbare Hubamplitude unabhängig von an den anliegenden Strömungsparametern und die definierte Begrenzbarkeit der Bewegung der Mikrosiebvorrichtung (insbesondere der Mikrosieb), was Zerstörungen derselben durch zu große Auslenkungen sicher vermeidet.

Selbstverständlich ist die Erfindung nicht auf die dargestellte Ausführungsform beschränkt.

Insbesondere sind Form und Geometrie des Mikrosiebs weitgehend beliebig variierbar und den jeweiligen Einbauverhältnissen anpassbar.

Die Amplitude der Bewegung beträgt vorzugsweise nur wenige, insbesondere 10 µm bis 2 mm. Die Frequenzamplitude wird vorzugsweise auf einen Wert zwischen 0,1 Hz und 5 kHz eingestellt. Eine oder beide Größen werden vorzugsweise zeitvariabel mit unterschiedlichem Betrag angesteuert, da dies zu besonders guten Reinigungsergebnissen führt.

### Bezugszeichen

- Trommel: 1
- Behältnis: 2
- Mikrosieb: 3
- Öffnungen: 4
- piezoelektrische Elemente: 5
- Stößel: 6
- Antriebsvorrichtung: 7
- Zulauf: 8
- Ablauf: 9

- Flüssigkeit: L
- Ebene: E
- Vertikale: z

## Patentansprüche

1. Filtrationseinrichtung (1) zur Filtration von Flüssigkeiten, die ein vorzugsweise in einem Behältnis (2) befestigtes Mikrosieb (3) mit Öffnungen (4) aufweist, welche das Mikrosieb (3) durchsetzen, **dadurch gekennzeichnet, daß** dem Mikrosieb (3) ein Aktuator zugeordnet ist, mit dem es möglich ist, das Mikrosieb (3) in der Flüssigkeit vorzugsweise senkrecht zu seiner Haupterstreckungsebene (E) derart zu bewegen, daß ein Spüleffekt entsteht, der Verstopfungen und Verschmutzungen aus den Öffnungen (4) des Mikrosiebes löst.

2. Filtrationsvorrichtung nach einem der vorstehenden Ansprüche, **dadurch gekennzeichnet, daß** der Aktuator wenigstens ein oder mehrere piezoelektrische(s) Element(e) (5) aufweist.

3. Filtrationsvorrichtung nach einem der vorstehenden Ansprüche, **dadurch gekennzeichnet, daß** die piezoelektrischen Elemente (5) direkt in das Mikrosieb (3) integriert oder an dieser angebracht sind.

4. Filtrationsvorrichtung nach einem der vorstehenden Ansprüche, **dadurch gekennzeichnet, daß** der Aktuator als mechanischer Stößel (6) ausgelegt ist, der an der Sieboberfläche angreift und dazu ausgelegt ist, die Sieboberfläche mit vorgegebener Frequenzamplitude zu bewegen.

5. Filtrationsvorrichtung nach einem der vorstehenden Ansprüche, **dadurch gekennzeichnet, daß** dem Stößel ein elektromotorischer oder elektromagnetischer Antrieb (7) zugeordnet ist.

6. Filtrationsvorrichtung nach einem der vorstehenden Ansprüche, **dadurch gekennzeichnet, daß** die Frequenz der Bewegung des Aktuators zwischen 0,1 Hz und 5 kHz liegt und/oder daß die Amplitude der Bewegung des Aktuators und des Mikrosiebes von 10 µm bis zu 2 mm beträgt.

7. Verfahren zur Reinigung einer Filtrationsvorrichtung nach einem der vorstehenden Ansprüche, **dadurch gekennzeichnet, daß** auf das Mikrosieb (3) ein Aktuator mit einer derartigen Frequenz und einer Amplitude einwirkt, dass Verschmutzungen aus der Sieboberfläche gelöst werden.

8. Verfahren zur Reinigung einer Filtrationsvorrichtung nach einem der vorstehenden Ansprüche, **dadurch gekennzeichnet, daß** die Amplitude und/oder die Frequenz der Bewegung des Aktuators bei der Reinigung variiert werden.
